# EUROPEAN PATENT SPECIFICATION

(11) **EP 0 630 014 B1**
(45) Date of publication and mention of the grant of the patent: **20.12.2000**
(21) Application number: 94303876.0
(22) Date of filing: 27.05.1994
(51) Int. Cl.: G11B 17/04, G11B 15/675

(54) **Cartridge holder locking device**
Kassettenbehälterverriegelungsvorrichtung
Dispositif de verrouillage de support de cassette

(30) Priority: 01.06.1993 KR 9309801
(43) Date of publication of application: 21.12.1994
(73) Proprietor: SAMSUNG ELECTRONICS CO., LTD., Suwon-City, Kyungki-do (KR)
(72) Inventor: Ahn, Seoung-Joon, Seoul (KR)
(74) Representative: Neill, Alastair William

(56) References cited:
- EP-A- 0 048 759
- EP-A- 0 503 937
- GB-A- 1 473 560
- US-A- 4 793 569

## Description

The invention relates to a cartridge-holder locking device and, particularly but not exclusively to such a device for use with a magnetooptical disk player. Such a locking device having the precharacterising features of claim 1 is known from EP-A-0048759.

The development of magnetooptical disk cartridges of a 64mm diameter (commercially referred to as "minidisks") has been under way since the minidisk was first introduced (by Sony of Japan).

A portable player (Sony model MZ-1) for recording and playback operations with the minidisk, is on the market. This player has a slot into which a minidisk is insertable. A minidisk cartridge is loaded into the deck by the driving force of a motor, with a shutter of the cartridge being moved aside to open a communicating aperture. The cartridge is thereafter mounted on a turntable and rotated by a spindle motor during playback/recording operations.

In general, it is desirable that a portable player should be as light and small as possible, allow the rapid insertion/extraction of a disk cartridge, and have a very low power consumption. However, due to the specific construction of the insertion means, i.e., via a slot, the Sony minidisk player has a complicated structure for insertion/extraction of cartridges. Furthermore, due to limitations which are imposed on the player by providing it with a motorized loading mechanism, it is difficult to miniaturize and reduce the weight of the player and to speed up the inserting and extracting operations thereof. A further disadvantage is that utilising a motorized loading mechanism to insert and/or extract the minidisk increases the player's overall power consumption. Accordingly, battery power cannot be efficiently utilized.

Therefore, it is an aim of the invention to provide a cartridge holder locking device in which the number of components for use in opening and loading the cartridge holder may be reduced, so as to miniaturize and lighten a player, such as a magnetooptical disk player which incorporates the locking device, to increase opening and loading speeds and to reduce overall power consumption. This aim is achieved by the characterising features of appended claim 1.

The invention also includes a magnetooptical disk player provided with a cartridge-holder locking device.

EP-A-0 503 937 discloses a locking device with a slide plate, which slide plate is urged to its locking position by a tension spring extending from a protrusion on the slide plate to a protrusion of the player deck.

For a better understanding of the invention, and to show how embodiments of the same may be carried into effect, reference will now be made, by way of example, to the accompanying diagrammatic drawings, in which:
Figure 1 is a perspective view of a magnetooptical disk player incorporating a specific embodiment of a cartridge-holder locking device.
Figure 2 is a side view of the cartridge-holder locking device of Figure 1 showing the device with the cartridge holder in a closed position; and
Figure 3 is a side view of the cartridge-holder locking device of Figure 1 showing the device with the cartridge holder in an open position.

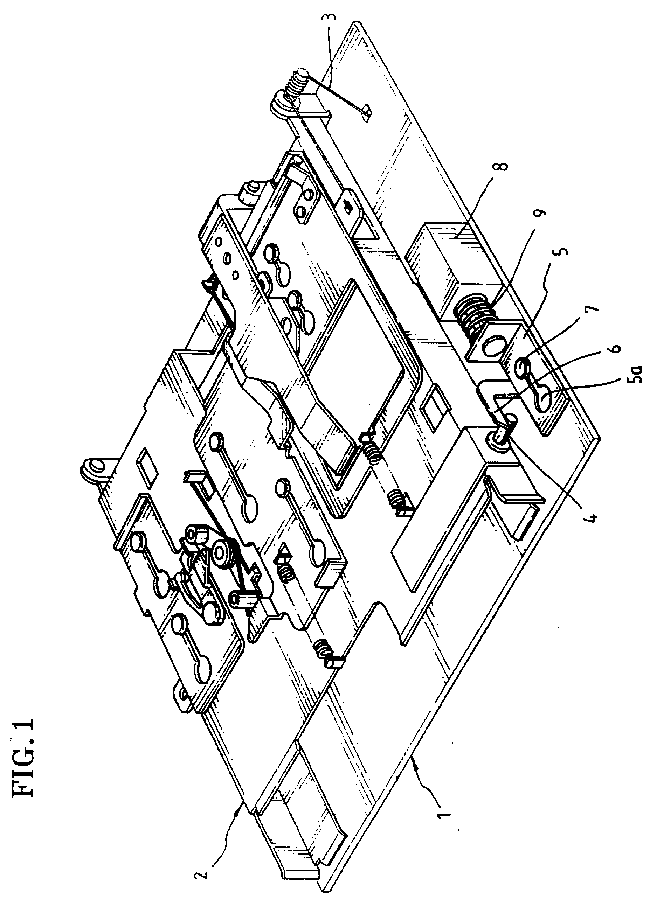

Referring to Figure 1, the rear of a cartridge holder 2 into which a disk cartridge is insertable, is pivotably mounted on one side of player deck 1. Cartridge holder 2 is resiliently biased away from an upper surface of the deck 1 by a torsion spring 3.

A locking pin 4 is provided on one side of cartridge holder 2. A slide plate 5 having a locking piece 6 for co-operable engagement with locking pin 4 and for blocking locking pin 4 is provided on the deck 1. Slide plate 5 is arranged for rectilinear movement along long guide hole 5a provided thereon with respect to a guide pin 7 fixed to deck 1.

A solenoid 8 for pulling the slide plate 5 is fixedly installed on the rear of slide plate 5 so as to enable the locking piece 6 to be released from the locking pin 4. A spring 9 for returning slide plate 5 to the initial position is installed between solenoid 8 and slide plate 5.

The cartridge-holder locking device operates as follows.

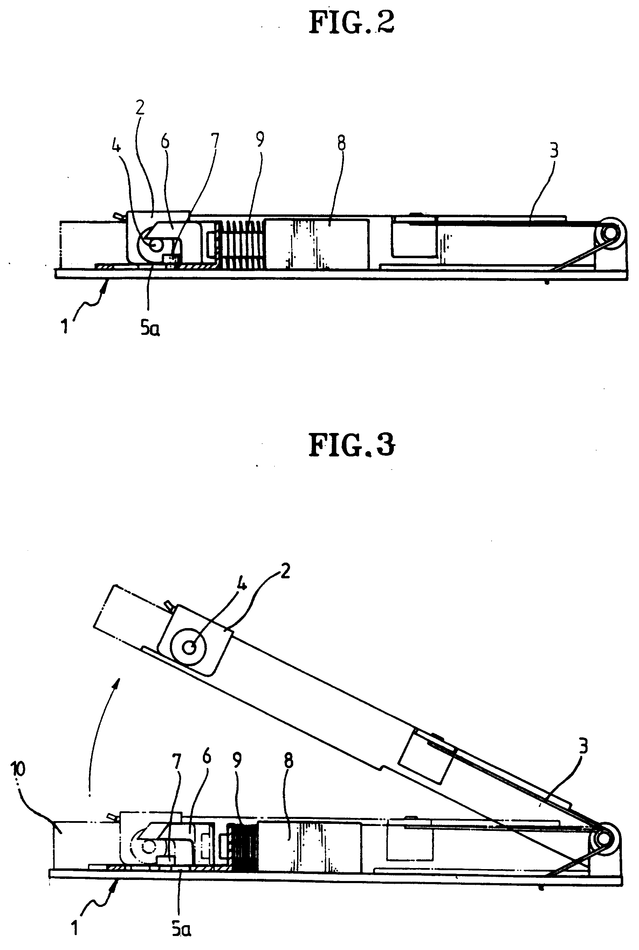

First, referring to Figure 2, in the state in which locking pin 4 located on one side of cartridge holder 2 is locked by locking piece 6 of slide plate 5, solenoid 8 is operated to pull slide plate 5 when power is applied thereto.

As slide plate 5 compresses spring 9 to move rectilinearly along long guide hole 5a with respect to guide pin 7, locking pin 4 installed on cartridge holder 2 is detached from locking piece 6 of slide plate 5. Cartridge holder 2 is rotated upwardly on its hinge by the force of torsion spring 3, so that the cartridge holder is opened as shown in Figure 3. When the applied power is cut off, locking piece 6 of slide plate 5 returns to the initial position by the restoring force of compressed spring 9.

Figure 3 shows cartridge holder 2 in an open condition. When cartridge holder 2 is pressed downwardly against the direction shown by the arrow subsequent to insertion of a disk cartridge 10 into the cartridge holder 2, locking pin 4 is lowered to contact with locking piece 6 and, as the locking piece 6 has an angled end portion contact of the locking piece 6 with this portion causes the slide plate 5 to move backwardly towards solenoid 8. Further depression of the locking pin 4 causes the pin 4 to disengage from the angled portion and the plate 5 to spring back under action of spring 9 and lock the cartridge holder into the closed position by means of locking piece 6, as shown in Figure 2.

As described above, cartridge-holder locking devices in accordance with the invention feature a reduced number of components so as to allow for a miniaturized, lightweight player, and may provide the possibility of increased opening and loading speeds and reduced power consumption so that players incorporating the device can be used efficiently under battery power.

## Claims

1. A cartridge-holder locking device comprising:
a cartridge holder (2) pivotally connected to a deck (1) of a player, the cartridge holder (2) being adapted for the reception of a cartridge;
means (3) for resiliently biasing said cartridge holder (2) away from said deck;
a locking pin (4) fixed to said cartridge holder; and
locking/releasing means provided on the deck (1) for locking or releasing engagement with said locking pin (4)
characterised in that said locking/releasing means comprises:
a guide pin (7) fixed to said deck;
a slide plate (5) installed on said player deck (1) and having an elongate guide hole (5a) formed therein for co-operation with said guide pin (7) so as to enable rectilinear movement of said slide plate (5);
an actuator installed on said player deck for moving said slide plate (5); and
a locking piece (6) formed on said slide plate (5) for locking and releasing said locking pin (4) using said actuator;
wherein said actuator comprises:
a solenoid (8) connected to said slide plate (5) so as to enable movement of the slide plate (5) to release said locking pin (4); and
a compression spring (9) installed between said solenoid (8) and said slide plate (5) so as to restore said slide plate (5) to an initial position.

2. A magnetooptical disk player provided with a cartridge-holder locking device in accordance with any of the preceding claims.

## Patentansprüche

1. Kassettenaufnahme-Arretiervorrichtung die umfasst:
eine Kassettenaufnahme (2), die schwenkbar an einem Laufwerk (1) eines Abspielgerätes angebracht ist, wobei die Kassettenaufnahme (2) eine Kassette aufnehmen kann;
eine Einrichtung (3), die die Kassettenaufnahme (2) federnd von dem Laufwerk wegdrückt;
einen Arretierzapfen (4), der an der Kassettenaufnahme befestigt ist; und
eine Arretier/Freigabe-Einrichtung, die an dem Laufwerk (1) vorhanden ist, um Eingriff mit dem Arretierzapfen (4) herzustellen oder aufzuheben,
**dadurch gekennzeichnet**, dass die Arretier/Löse-Einrichtung umfasst:
einen Führungszapfen (7), der an dem Laufwerk befestigt ist;
eine Gleitplatte (5), die an dem Laufwerk (1) des Abspielgerätes angebracht ist und ein darin ausgebildetes längliches Führungsloch (5a) aufweist, das mit dem Führungszapfen (7) zusammenwirkt, um geradlinige Bewegung der Gleitplatte (5) zu ermöglichen;
ein Betätigungselement, das an dem Laufwerk des Abspielgerätes angebracht ist, um die Gleitplatte (5) zu bewegen; und
ein Arretierteil (6), das an der Gleitplatte (5) ausgebildet ist, um den Arretierzapfen (4) mit dem Betätigungselement zu arretieren und freizugeben;
wobei das Betätigungselement umfasst:
ein Solenoid (8), das mit der Gleitplatte (5) so verbunden ist, dass Bewegung der Gleitplatte (5) zum Freigeben des Arretierzapfens (4) möglich ist; und
eine Druckfeder (9), die zwischen dem Solenoid (8) und der Gleitplatte (5) so angebracht ist, dass sie die Gleitplatte (5) in eine Ausgangsposition zurückführt.

2. Magnetooptischer Plattenspieler, der mit einer Kassettenaufnahme-Arretiervorrichtung gemäß einem der vorangehenden Ansprüche versehen ist.

## Revendications

1. Dispositif de verrouillage de support de cassette comprenant:
un support de cassette (2) relié de manière articulée à une table-support (1) d'un lecteur, le support de cassette (2) étant adapté pour la réception d'une cassette;
un moyen (3) pour tirer de manière élastique ledit support de cassette (2) à l'écart de ladite table-support;
une broche de verrouillage (4) fixée audit support de cassette; et
un moyen de verrouillage/libération prévu sur la table-support (1) pour libérer ou verrouiller un engagement avec ladite broche de verrouillage (4);
caractérisé en ce que ledit moyen de verrouillage/libération comprend:
une broche de guidage (7) fixée à ladite table-support;
une plaque coulissante (5) installée sur ladite table-support de lecteur (1) et comportant un orifice de guidage allongé (5a) formé de façon à coopérer avec ladite broche de guidage (7) afin de permettre un déplacement rectiligne de ladite plaque coulissante (5);
un actionneur installé sur ladite table-support de lecteur pour déplacer ladite plaque coulissante (5); et
une pièce de verrouillage (6) formée sur ladite plaque coulissante (5) pour verrouiller et libérer ladite broche de verrouillage (4) à l'aide dudit actionneur;
dans lequel ledit actionneur comprend:
un solénoïde (3) connecté à ladite plaque Coulissante (5) de façon à permettre un déplacement de la plaque coulissante (5) pour libérer ladite broche de verrouillage (4); et
un ressort de pression (9) installé entre ledit solénoïde (8) et ladite plaque coulissante (5) afin de ramener ladite plaque coulissante (5) à une position initiale.

2. Lecteur de disque magnéto-optique muni d'un dispositif de verrouillage de support de cassette selon l'une quelconque des revendications précédentes.
